Europäisches Patentamt

European Patent Office

Office européen des brevets

(19)

(11) Numéro de publication: **0 214 883**
**B1**

## FASCICULE DE BREVET EUROPEEN

(45) Date de publication du fascicule du brevet:
23.11.89

(51) Int. Cl.⁴: **F24H 1/00, F23L 15/04**

(21) Numéro de dépôt: 86401662.1

(22) Date de dépôt: 24.07.86

(54) Chaudière à condensation à panache atténué.

(30) Priorité: 25.07.85 FR 8511400

(43) Date de publication de la demande:
18.03.87 Bulletin 87/12

(45) Mention de la délivrance du brevet:
23.11.89 Bulletin 89/47

(84) Etats contractants désignés:
AT BE CH DE GB IT LI LU NL SE

(56) Documents cités:
EP-A- 0 144 254
DE-A- 3 110 361
DE-A- 3 244 895

(73) Titulaire: GAZ DE FRANCE, 23, rue Philibert Delorme,
F-75017 Paris(FR)

(72) Inventeur: Couprie, François, 30 Rue des Haies,
F-75020 Paris(FR)

(74) Mandataire: Thévenet, Jean-Bruno et al, Cabinet BEAU
DE LOMENIE 55 rue d'Amsterdam, F-75008 Paris(FR)

ACTORUM AG

## Description

La présente invention a pour objet une chaudière à condensation à panache atténué, comprenant un conduit d'alimentation en air comburant, un conduit d'évacuation des produits de combustion débouchant tous deux dans l'atmosphère en dehors du local contenant la chaudière, une canalisation d'alimentation en gaz combustible, un ventilateur d'extraction des produits de combustion, un corps de chauffe équipé d'un brûleur, d'au moins un échangeur-condenseur, entre un circuit d'eau à chauffer et les produits de combustion formés dans le corps de chauffe et d'un circuit d'évacuation de l'eau condensée formée au niveau de l'échangeur-condenseur, une enceinte étanche entourant le corps de chauffe, et un premier échangeur disposé au-dessus du corps de chauffe pour réaliser un échange thermique entre l'air frais issu du conduit d'alimentation et les produits de combustion issus du corps de chauffe et non encore dilués.

On sait que le rendement d'une chaudière est d'autant meilleur que la température de sortie des produits de combustion est plus basse et donc que la quantité de chaleur emportée par ces fumées est plus faible. Ces produits de combustion contiennent du gaz carbonique et de l'eau. Si l'on peut abaisser leur température a une valeur suffisamment basse (au-dessous de leur température de rosée, soit environ 55°C), une partie de l'eau qu'ils contiennent va se condenser, en libérant de la chaleur latente récupérable. D'où le nom de chaudière à condensation pour ces matériels à très haut rendement récupérant au mieux la chaleur sensible des fumées et en partie la chaleur latente correspondant à la condensation de la vapeur d'eau de combustion. Ce résultat est obtenu en augmentant la surface de l'échangeur entre les fumées et l'eau à chauffer ou en doublant l'échangeur principal par un deuxième échangeur récupérateur.

Dans une chaudière à condensation les produits de combustion sont cependant souvent évacués de la chaudière à une température telle qu'une partie de l'énergie totale théoriquement récupérable est perdue. Par ailleurs, les produits de combustion étant refroidis jusqu'à saturation au moment de leur rejet dans l'atmosphère, ce rejet s'accompagne, dans une atmosphère relativement froide, d'un panache de vapeur de plusieurs mètres de longueur qui est particulièrement inesthétique lorsque le point de sortie des fumées est situé sur un mur d'habitation par exemple.

On a déjà proposé, par exemple par le EP-A-0 144 254 de mettre en œuvre des moyens qui tendent à limiter l'apparition d'un panache en sortie dans l'atmosphère des produits de combustion issus d'une chaudière à condensation. Selon ce dispositif connu, on réalise une dilution des produits de combustion avec une fraction d'air capté, au voisinage immédiat de la bouche d'aspiration de l'air comburant et de rejet des produits de combustion dans l'air ambiant. Un tel dispositif d'évacuation dans l'air ambiant des produits de combustion d'une chaudière à condensation permet de réduire dans une certaine mesure le panache de vapeur, mais implique de disposer un échangeur de chaleur au voisinage immédiat de la sortie des produits de combustion, ce qui ne s'avère pas toujours commode ni favorable à une récupération optimale de la chaleur.

On connait par ailleurs par le document DE-A-3 244 895 une chaudière équipée d'un condenseur placé sur le trajet des fumées et réalisant un échange de chaleur entre les fumées et un fluide à chauffer. Selon l'un des modes de réalisation présentés, de l'air ayant parcouru l'espace situé entre le corps de chauffe et une enceinte extérieure est mélangé aux fumées en sortie du condenseur. L'air comburant est cependant introduit directement au niveau du brûleur, puis circule ensuite en partie dans l'espace entre le corps de chauffe et l'enceinte extérieure avant d'être mélangé aux gaz de combustion. Dans un tel mode de réalisation, les échanges de chaleur entre l'air comburant et les fumées ne peuvent pas être optimisés et la question de la réduction d'un panache de vapeur ne se pose pas.

La présente invention a pour objet de réduire au maximum les risques d'apparition d'un panache de vapeur à la sortie du conduit d'évacuation des produits de combustion d'une chaudière à condensation, tout en limitant au maximum les échanges parasites de chaleur au sein même de la chaudière à condensation.

Ces buts sont atteints grâce à une chaudière à condensation du type mentionné en tête de la description, caractérisée en ce qu'elle comprend des déflecteurs, pour canaliser une partie de l'air issu dudit premier échangeur et provoquer un balayage de l'espace libre situé entre le corps de chauffe et l'enceinte étanche tandis que le reste de l'air issu du premier échangeur est dirigé vers le brûleur, et au moins un orifice calibré pour introduire l'air ayant balayé le corps de chauffe dans le conduit d'évacuation des produits de combustion en amont du ventilateur extracteur et en aval du premier échangeur, en ce que le conduit d'alimentation en air comburant frais à partir de l'atmosphère et le conduit d'évacuation des produits de combustion dilués vers l'atmosphère situés en aval du ventilateur extracteur sont disposés à l'intérieur d'une gaine commune, présentent des diamètres sensiblement égaux et sont pour l'essentiel juxtaposés et parallèles en étant disposés tangentiellement l'un à l'autre sur la plus grande partie de la gaine, et en ce qu'au voisinage de l'embouchure de la gaine le conduit d'évacuation des fumées est coudé et ramené dans l'axe de la gaine tandis que le tube de prélèvement d'air frais est prolongé par une partie de section accrue qui vient se raccorder sur la gaine de manière à assurer une prise d'air selon une couronne coaxiale au tube d'évacuation des fumées.

Selon un premier mode de réalisation possible, le premier échangeur est du type à contre-courant, le flux d'air étant descendant et le flux de produit de combustion étant montant.

Selon un autre mode de réalisation, qui est en général préférable, le premier échangeur est du type à courants parallèles, les flux d'air et des produits de combustion étant descendants.

Selon un mode particulier de réalisation applicable notamment lorsque le corps de chauffe n'est pas étanche, la chaudière comprend un second échangeur disposé au-dessous du corps de chauffe pour réaliser un échange thermique entre l'air ayant balayé le corps de chauffe et les produits de combustion issus du corps de chauffe avant que ces derniers pénètrent dans le premier échangeur.

Dans ce cas, le second échangeur est disposé au-dessus du premier échangeur en étant du circuit d'air du premier échangeur.

Le second échangeur est de préférence du type à courants croisés, le flux d'air étant légèrement montant en étant peu incliné par rapport à l'horizontale, tandis que le flux de produits de combustion est descendant.

Selon un mode particulier de réalisation, le premier échangeur est composé de deux demi-échangeurs situés de part et d'autre d'un conduit vertical central d'évacuation des produits de combustion ayant traversé les deux demi-échangeurs.

Les premier et deuxième échangeurs peuvent être par exemple du type à ailettes.

D'autres caractéristiques et avantages de l'invention ressortiront de la description suivante faite en référence aux dessins annexés sur lesquels:

- la figure 1 est un schéma simplifié montrant le principe d'un premier mode de réalisation de l'invention avec un seul échangeur air-fumées supplémentaire du type à contre-courant,
- la figure 2 est une vue schématique en coupe d'un exemple de chaudière à condensation selon l'invention mettant en oeuvre le principe de la figure 1,
- les figures 2a et 2b représentent des sections selon les plans IIa-IIa et IIb-IIb de la figure 2,
- la figure 3 est une vue en perspective d'une chaudière à condensation selon le mode de réalisation des figures 1 et 2, mais avec un échangeur air-fumées présentant des courants parallèles,
- la figure 4 est une vue partielle en coupe montrant l'échangeur supplémentaire air-fumées de la figure 3,
- les figures 5 et 6 sont des vues en coupe selon les plans V-V et VI-VI de la figure 4,
- la figure 7 montre une représentation schématique d'une chaudière à condensation selon un autre mode de réalisation de l'invention, mettant en oeuvre deux échangeurs supplémentaires air-fumées,
- la figure 8 est une vue en coupe analogue à celle de la figure 4, mais correspondant au mode de réalisation de la figure 7,
- les figures 9 et 10 sont des vues en coupe selon les plans IX-IX et X-X de la figure 8, et
- la figure 11 est une vue en perspective du second échangeur de chaleur représenté sur les figures 7, 8 et 10.

On voit sur la figure 2 une chaudière à condensation comprenant à l'intérieur d'une enveloppe étanche 110 un corps de chauffe 100 à la base duquel est disposé un brûleur 101 alimenté en gaz à partir d'une canalisation 108. Le corps de chauffe 100 comprend un échangeur principal 10 constitué par un ensemble de conduites 11 dans lesquelles circule un fluide à réchauffer et qui sont en contact avec les produits de combustion issus du brûleur 101. Un échangeur-condenseur 20 comprenant des conduits 21, à l'intérieur desquels circule le fluide à réchauffer, et des ailettes 22 assurent un échange de chaleur complémentaire entre les produits de combustion ayant déjà traversé l'échangeur principal 10 et le fluide circulant dans les conduits 21. Lors de l'échange de chaleur au niveau de l'échangeur-condenseur 20, les produits de combustion perdent une partie de l'eau qu'ils contiennent, qui se condense et est récupérée par une canalisation collectrice d'évacuation de l'eau condensée, non représentée sur la figure 2. Après avoir traversé l'échangeur-condenseur 20, les produits de combustion F sont aspirés par un ventilateur 102 dans un conduit central 107 pour être évacués par un conduit d'évacuation 106 vers l'atmosphère. L'air comburant nécessaire à l'alimentation du brûleur 101 est par ailleurs introduit par un conduit 105 voisin du conduit 106 d'évacuation des produits de combustion.

Dans une chaudière à condensation traditionnelle raccordée à l'extérieur par l'intermédiaire d'une ventouse, le conduit d'évacuation des fumées 106 et le conduit d'amenée d'air frais 105 sont en général coaxiaux. Ceci entraîne des échanges thermiques notables, qui sont encore renforcés si l'on dispose au niveau des ces conduits 105, 106 un véritable échangeur de chaleur, comme décrit pr exemple dans la demande de brevet français 8315657.

Selon la présente invention, on vise précisément à limiter au maximum les échanges thermiques entre le conduit d'amenée d'air frais 105 et le conduit 106 d'évacuation des produits de combustion. Comme on peut le voir sur la figure 2, la figure 2a, et la figure 2b, le conduit 105 d'amenée d'air et le conduit 106 d'évacuation de produits de combustion sont disposés parallèlement l'un à l'autre sans être coaxiaux, et présentent des diamètres sensiblement égaux. Comme on peut le voir sur la figure 2b, les deux conduits 105 et 106 peuvent être incorporés dans une gaine commune 104 et être disposés tangentiellement l'un à l'autre. Une matière de calorifugeage 109 est disposée à l'intérieur de la gaine 104 dans les parties non occupées par les conduits 105 et 106. Bien que,en aval du ventilateur 102, les conduits 105 et 106 présentent sur la plus grande partie de la gaine 104 la configuration représentée sur la figure 2b, au voisinage de l'embouchure de la gaine 104, le conduit 106 d'évacuation des fumées est ramené dans l'axe de la gaine 104 tandis que le tube 105 de prélèvement d'air frais est prolongé par une partie qui vient se raccorder sur la gaine 104 de manière à assurer une prise d'air selon une couronne coaxiale au tube 106, comme représenté sur la figure 2a. Ceci permet de réaliser un équilibrage dynamique en présence de vents obliques au niveau du débouché dans l'atmosphère. La configuration des conduits 105 et 106 représentés sur la figure 2 permet de limiter les échanges thermiques entre l'air frais introduit par le conduit 105 et les produits de combustion déjà dilués avec l'air évacués par le conduit 106.

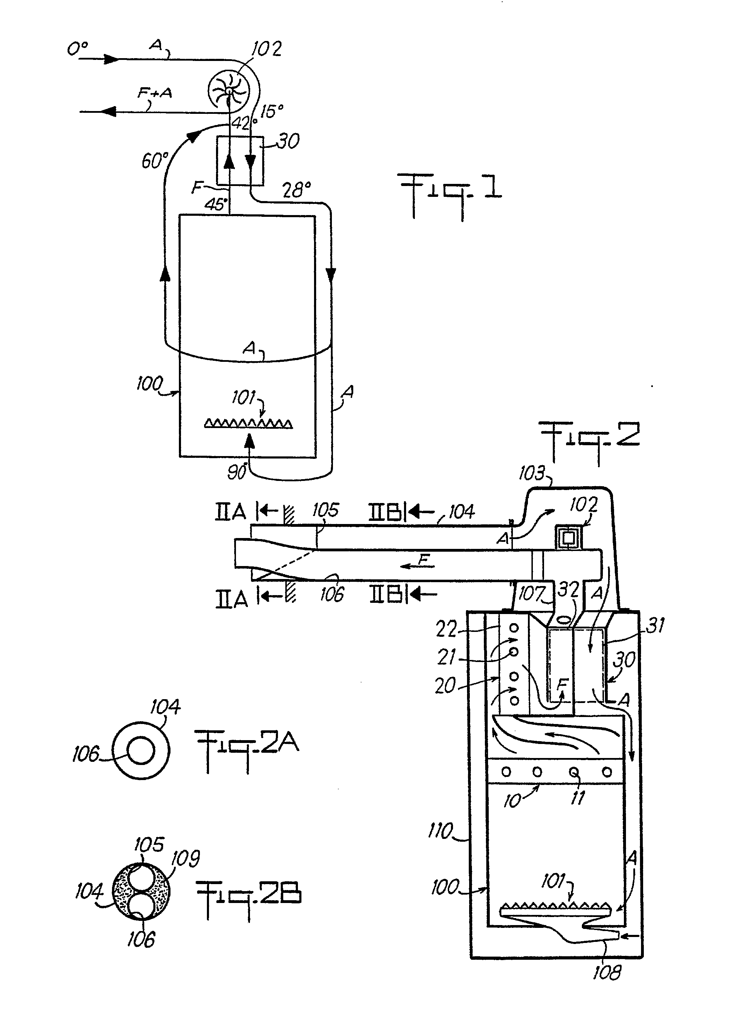

Le schéma de la figure 1 permet de suivre le trajet de l'air A prélevé à l'extérieur ainsi que celui des fumées F qui sortent du corps de chauffe 100. L'air A prélevé à l'extérieur à une température assez basse, par exemple voisine de 0°, est amené à l'entrée d'un premier échangeur air-fumées 30. Compte tenu des faibles échanges thermiques au niveau du conduit 105 d'amenée de l'air, et à l'intérieur du capot 103 entourant le ventilateur 102, l'air A peut n'être que très peu réchauffé à l'entrée de l'échangeur 30. L'air A peut présenter ainsi à titre d'exemple une température de l'ordre de 15°C à l'entrée de l'échangeur 30 et une température de l'ordre de 28°C en sortie de l'échangeur 30. L'air A issu de l'échangeur 30 circule entre le corps de chauffe 100 et une enveloppe étanche extérieure 110 et se trouve guidé par des déflecteurs disposés entre le corps de chauffe 100 et l'enceinte étanche 110, de telle manière qu'une partie de l'air A soit dirigée vers le brûleur 101 pour servir d'air comburant tandis qu'une autre partie de l'air A est amenée à circuler autour du corps de chauffe 100 dans l'espace libre entre celui-ci et l'enveloppe étanche 110, afin de permettre la récupération des fuites thermiques du corps de chauffe. L'air comburant peut ainsi arriver à une température de l'ordre de 90°C au niveau du brûleur 101, et l'air réchauffé par les fuites thermiques au niveau du corps de chauffe peut présenter une température de l'ordre de 60°C au moment où cet air est mélangé aux produits de combustion au voisinage du ventilateur 102. Les produits de combustion F issus du corps de chauffe 100 sont introduits dans l'échangeur 30 par exemple à la partie inférieure de celui-ci, à une température qui peut être de l'ordre de 45°C, et sont mélangés à l'air de dilution en sortie de l'échangeur 30.

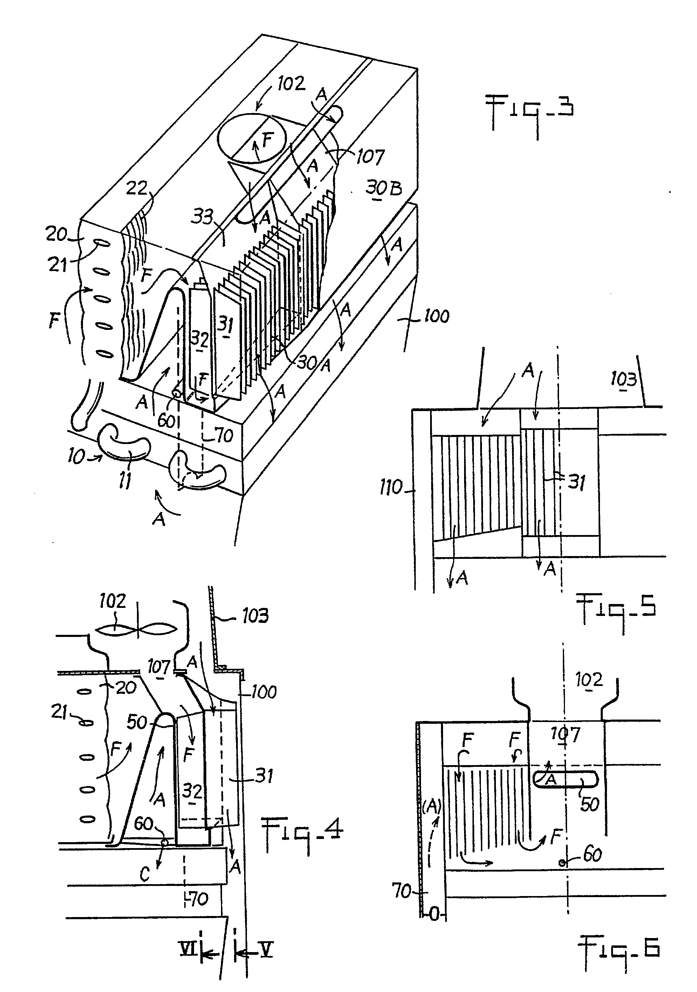

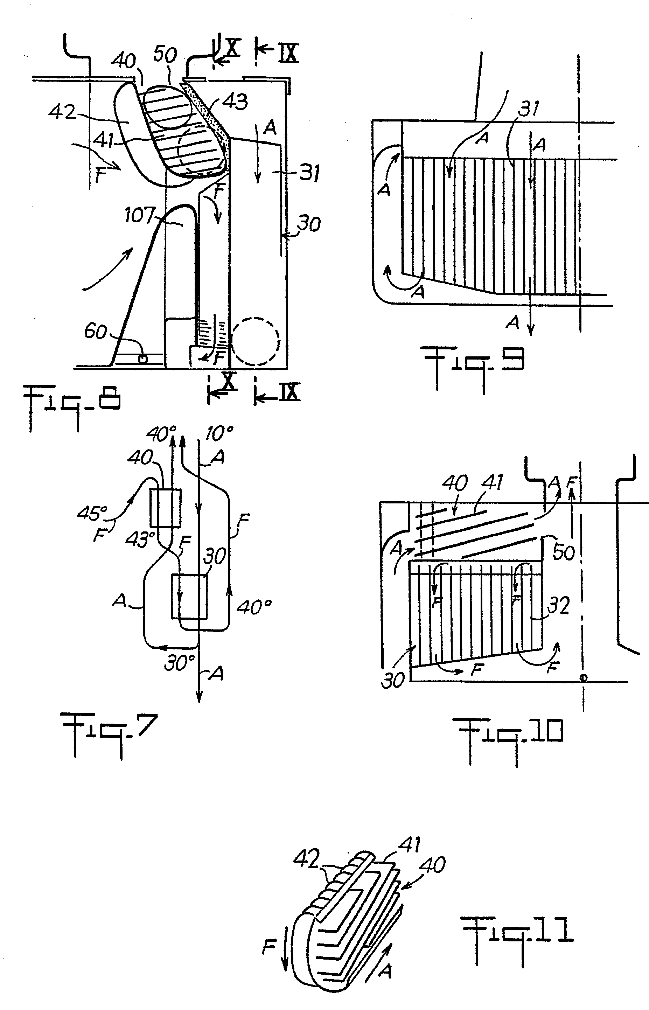

Les figures 1 et 2 représentent un échangeur 30 à contre-courant dans lequel le courant d'air est descendant et le courant de fumée est montant. En pratique, ils s'avère cependant préférable d'utiliser un échangeur 30 à courants parallèles et de même sens, comme représenté sur les figures 3 à 10. En effet, dans l'échangeur 30, du côté des ailettes 32 en contact avec les fumées F, il est préférable que le courant F soit descendant afin d'éviter l'entraînement de condensats vers le ventilateur 102. En revanche, il n'y a pas d'inconvénient à ce que l'air frais A en contact avec les ailettes 31 de l'échangeur 30 soit également descendant. La chute de la température des fumées F est faible dans l'échangeur 30, de l'ordre de 5°C, et la température des ailettes 31, 32 est assez homogène compte tenu de leur relativement faible longueur, qui peut être de l'ordre de 12cm environ. Comme on peut le voir sur la figure 3, l'échangeur 30 est avantageusement constitué de deux demi-échangeurs 30a, 30b, situés de part et d'autre d'un conduit central 107 ascendant qui débouche à l'entrée du ventilateur 102. Dans chacun des deux demi-échangeurs 30a, 30b, les fumées F descendent en étant en contact avec des ailettes 32 disposées d'un côté d'une plaque médiane 33, et l'air frais A descend en étant en contact avec les ailettes 31 situées de l'autre côté de la plaque médiane 33. Les fumées F issues de l'échangeur 30 remontent par le conduit central 107 pour être mélangées à de l'air A aspiré par le ventilateur 102, de façon à produire un flux de fumées diluées qui seront évacuées par le conduit 106. L'air A issu de l'échangeur 30 est conduit à suivre un assez long parcours vers les côtés et le bas du corps de chauffe 100 avant d'être respiré à l'entrée du ventilateur 102, grâce à la présence de déflecteurs 70 disposés dans l'intervalle entre le corps de chauffe et l'enveloppe étanche 110, non représentée sur la figure 3. Les condensats C formés dans l'échangeur 30 sont récupérés à la base de celui-ci et évacués par un conduit 60 (fig 4).

L'air A réchauffé dans l'intervalle entre le corps de chauffe 100 et l'enveloppe étanche de la chaudière 110 est repris par une ouie calibrée 50 immédiatement à l'entrée du ventilateur d'extraction 102 pour être mélangé aux fumées issues de l'échangeur 30.

L'invention s'applique facilement à des chaudières existantes. Dans le cas de chaudières à corps de chauffe étanche au-dessus du brûleur, il suffit d'ajouter au-dessus du corps de chauffe un petit bloc échangeur air froid-fumées 30, d'adjoindre également quelques petites pièces simples servant de déflecteurs 70 entre le corps de chauffe 100 et l'habillage extérieur 110 de la chaudière, et de modifier les conduits d'amenée d'air et d'évacuation des produits de combustion 105, 106 au voisinage de la ventouse en contact avec l'atmosphère extérieure. L'accroissement de la perte de charge étant très peu sensible, le ventilateur d'origine n'a en principe pas besoin d'être modifié. Avec ces quelques modifications, on obtient une surchauffe importante de l'air de dilution qui circule sur quelques décimètres autour du plan de chauffe avant d'être apiré en même temps que les fumées refroidies par le ventilateur 102.

Certaines chaudières existantes comportent un corps de chauffe 100 non étanche. Dans ce cas, le balayage externe du corps de chauffe peut capter des produits de combustion incomplètes. Il peut en résulter des teneurs en oxyde de carbone prohibitives. L'air de dilution doit donc pouvoir être séparé rapidement de l'air comburant. Dans ce cas, on utilise en plus de l'échangeur 30, un second échangeur 40. Le premier échangeur 30, qui peut être similaire à celui décrit précédemment, constitue un étage froid et reçoit l'intégralité de l'air introduit par le conduit de prélèvement 105. Le second échangeur 40 constitue un étage chaud et reçoit d'une part les fumées brutes F issues du corps de chauffe et d'autre part de l'air de dilution qui est issu du premier échangeur 30 et a circulé entre le corps de chauffe et l'enveloppe extérieure 110. L'air issu du second échangeur 40 est ensuite mélangé aux produits de combustion issus du premier échangeur 30. Par ailleurs, les produits de combustion issus du second échangeur 40 sont introduits dans le premier échangeur 30 (fig 7). A titre d'exemple, la température de l'air à l'entrée du premier échangeur 30 peut être de l'ordre 10°C et se situer à la sortie de cet échangeur 30 à une température de l'ordre de 30°C pour atteindre une température de l'ordre de 40°C en sortie du second échangeur 40. La température des produits de combustion peut être de l'ordre de 45°C à l'entrée du second échangeur 40, être de l'ordre de 43°C en sortie du second échangeur 40 et se situer à une température voisine de 40°C en sortie du premier échangeur 30.

Sur le schéma de la figure 7, on a représenté deux échangeurs 30 et 40 avec des trajets de fumée qui sont descendants afin de faciliter la séparation des condensats. Le trajet de l'air est descendant dans le premier échangeur 30 tandis qu'il est montant dans le second échangeur 40.

En réalité, comme représenté sur les figures 8, 10 et 11, les ailettes 41 du second échangeur 40, qui sont en contact avec l'air A destiné à être dilué avec les fumées F sont relativement peu inclinées par rapport à l'horizontale et définissent donc des trajets qui ne sont que légèrement montants. Dans la mesure où le second échangeur 40 est disposé au-dessus du premier échangeur 30, les ailettes 42 destinées à être en contact avec les fumées sont de préférence verticales de façon à définir un trajet descendant qui se prolonge par un trajet descendant défini par les ailettes 42 du premier échangeur 30. Le second échangeur 40 est par ailleurs muni d'éléments d'isolation thermique 43 afin d'éviter un échange thermique entre ce second échangeur et l'air A introduit à partir du conduit 105 pour être en contact avec les ailettes 31 du premier échangeur 30.

Le dispositif selon l'invention permet de réduire efficacement l'apparition de panaches de vapeur au niveau de la sortie du conduit de fumées 106, dans la mesure où d'une part les fumées saturées à la sortie de l'échangeur-condenseur 20 sont refroidies à l'aide d'un échangeur 30 à air frais, ce qui permet d'abaisser la teneur en eau des fumées F, et d'autre part les fumées F sont ensuite diluées avec une partie de l'air A ayant traversé l'échangeur 30, qui a en outre été réchauffé au contact du corps de chauffe 100. Ceci permet de rejeter dans l'atmosphère un mélange gazeux non saturé donc risquant beaucoup moins de produire un panache de condensation.

Contrairement à des dispositifs existants, selon l'invention, on amène l'air extérieur aussi froid que possible à l'entrée de l'échangeur 30 placé sur la sortie des fumées, avant la dilution, et on réduit donc au minimum les échanges entre cet air frais et les fumées diluées chaudes circulant à contre courant dans le tube 106.

La variante de réalisation des figures 7 à 11 procède du même principe de fonctionnement que les modes de réalisation des figures 1 à 6, et vise simplement à s'adapter à des chaudières dans lesquelles le corps de chauffe n'est pas étanche au-dessus du brûleur. Cette variante de réalisation ne se distingue donc de la précédente que par le fait que l'air sortant du premier échangeur 30 va pour partie au brûleur 101 et pour une autre partie en direction d'un second échangeur 40 situé plus en amont sur le circuit de fumées et séparé thermiquement du premier échangeur 30.

**Revendications**

1. Chaudière à condensation à panache atténué, comprenant un conduit (105) d'alimentation en air comburant, un conduit (106) d'évacuation des produits de combustion débouchant tous deux dans l'atmosphère en dehors du local contenant la chaudière, une canalisation (108) d'alimentation en gaz combustible, un ventilateur (102) d'extraction des produits de combustion, un corps de chauffe (100) équipé d'un brûleur (101), d'au moins un échangeur condenseur (10, 20) entre un circuit d'eau à chauffer (11, 21) et les produits de combustion formés dans le corps de chauffe (100) et d'un circuit (60) d'évacuation de l'eau condensée formée au niveau de l'échangeur-condenseur (10, 20), une enceinte étanche (110) entourant le corps de chauffe (100), et un premier échangeur (30) disposé au-dessus du corps de chauffe (100) pour réaliser un échange thermique entre l'air frais (A) issu du conduit d'alimentation (105) et les produits de combustion (F) issus du corps de chauffe (100) et non encore dilués, caractérisée en ce qu'elle comprend des déflecteurs (70), pour canaliser une partie de l'air (A) issu dudit premier échangeur (30) et provoquer un balayage de l'espace libre situé entre le corps de chauffe (100) et l'enceinte étanche (110) tandis que le reste de l'air issu du premier échangeur (30) est dirigé vers le brûleur (101), et au moins un orifice calibré (50) pour introduire l'air (A) ayant balayé le corps de chauffe (100) dans le conduit (107) d'évacuation des produits de combustion (F) en amont du ventilateur extracteur (102) et en aval du premier échangeur (30), en ce que le conduit (105) d'alimentation en air comburant frais à partir de l'atmosphère et le conduit (106) d'évacuation des produits de combustion dilués vers l'atmosphère situés en aval du ventilateur extracteur (102) sont disposés à l'intérieur d'une gaine commune (104), présentent des diamètres sensiblement égaux et sont pour l'essentiel juxtaposés et parallèles en étant disposés tangentiellement l'un à l'autre sur la plus grande partie de la gaine (104), et en ce qu'au voisinage de l'embouchure de la gaine (104) le conduit (106) d'évacuation des fumées est coudé et ramené dans l'axe de la gaine (104) tandis que le tube (105) de prélèvement d'air frais et prolongé par une partie de section accrue qui vient se raccorder sur la gaine (104) de manière à assurer une prise d'air selon une couronne coaxiale au tube (106) d'évacuation des fumées.

2. Chaudière selon la revendication 1, caractérisée en ce que le premier échangeur (30) est du type à contre-courant, le flux d'air étant descendant et le flux de produits de combustion étant montant.

3. Chaudière selon la revendication 1, caractérisée en ce que le premier échangeur (30) est du type à courants parallèles, les flux d'air et des produits de combustion étant descendants.

4. Chaudière selon l'une quelconque des revendications 1 à 3, caractérisée en ce qu'elle comprend un second échangeur (40) disposé au-dessus du corps de chauffe (100) pour réaliser un échange thermique entre l'air (A) ayant balayé le corps de chauffe (100) et les produits de combustion (F) issus du corps de chauffe (100) avant que ces derniers pénètrent dans le premier échangeur (30).

5. Chaudière selon la revendication 4, caractérisée en ce que le second échangeur (40) est disposé au-dessus du premier échangeur (30) en étant isolé du circuit d'air (31) du premier échangeur (30).

6. Chaudière selon la revendication 5, caractérisée en ce que le second échangeur (40) est du type à courants croisés, le flux d'air (A) étang légèrement montant en étant peu incliné par rapport à l'horizontale, tandis que le flux de produits de combustion (F) est descendant.

7. Chaudière selon l'une quelconque des revendications 1 à 6, caractérisée en ce que le premier échangeur (30) est composé de deux demi-échangeurs (30a, 30b) situés de part et d'autre d'un conduit vertical central (107) d'évacuation des produits de combustion (F) ayant traversé les deux demi-échangeurs (30a, 30b).

8. Chaudière selon l'une quelconque des revendications 1 à 7, caractérisée en ce que le premier échangeur (30) est du type à ailettes.

9. Chaudière selon l'une quelconque des revendications 4 à 6, caractérisée en ce que le second échangeur (40) est du type à ailettes.

10. Chaudière selon l'une quelconque des revendications 1 à 9, caractérisée en ce qu'une matière de calorifugeage (109) est disposée à l'intérieur de la gaine (104) dans les parties non occupées par le conduit (105) d'alimentation en air et le conduit (106) d'évacuation des produits de combustion.

## Claims

1. Reduced-wreath condensation boiler comprising: a feed duct (105) supplying oxygen-carrying air, an exhaust duct (106) for exhausting diluted combustion products, both ducts issuing into the atmosphere outside the room containing the boiler, a feed channel (100) for fuel gas; an extractor (102) for extracting the combustion products, a heating body (100) fitted with a burner (101), with at least one heat exchanger-condenser (10, 20) for exchanging heat between a circuit of water to be heated (11, 21) and the combustion products formed in the heating body (100) and a circuit (60) for removing the condensed water which forms on the heat exchanger-condenser (10, 20), and airtight enclosure (110) enclosing said heating body (100), and a first exchanger (30) placed above the heating body (100) to cause a heat exchange between the fresh air (A) issued from the feed duct (105) and the combustion products (F) issued from the heating body (100) but not yet diluted, characterized in that it comprises deflectors (70) for channeling a portion of the air (A) issued from said first heat exchanger (30) and for causing a sweeping of the free space situated between the heating body (100) and the airtight enclosure (110), while the remainder of the air from the first heat exchanger (30) is directed towards the burner (101), and at least one calibrated orifice (50) for injecting the air (A) which has swept over the heating body (100) into the exhaust duct (107) for the combustion products (F) upstream from the extractor fan (102) and downstream of the first exchanger (30) in that the feed duct (105) supplying fresh oxygen carrying air from the atmosphere and the exhaust duct (106) exhausting the diluted combustion products toward the atmosphere, both ducts being situated downstream of the extractor fan (102), are placed inside the same sheath (104), have substantially equal diameter and are essentially juxtaposed and parallel while being placed tangentially to one another over most of the sheath (104) the gas flue exhaust duct (106) is bent and brought back into the axis of the sheath (104) whereas the fresh air inlet duct (105) is extended by a part of increased cross-section connecting up with the sheath (104) so as to ensure an air intake according to a ring coaxial to the gas flue exhaust duct.

2. Boiler according to claim 1, characterized in that the first heat exchanger (30) is a counter-flow type heat exchanger, with the air flowing downwards and the combustion products flowing upwards.

3. Boiler according to claim 1, characterized in that the first heat exchanger (30) is of the parallel flow type, with both the air and the combustion products flowing downwardly.

4. Boiler according to any one of claims 1 to 3, characterized in that it further comprises a second heat exchanger (40) disposed above the heating body (100) for exchanging heat between the air (A) which has swept over the heating body (100) and the combustion products (F) from the heating body (100) before said combustion products enter the first heat exchanger (30).

5. Boiler according to claim 4, characterized in that the second heat exchanger (40) is disposed above the first heat exchanger (30) and is isolated from the air circuit (31) of the first heat exchanger (30).

6. Boiler according to claim 5, characterized in that the second heat exchanger (40) is of the crossflow type, with the air flow (A) rising slightly at a small angle to the horizontal, while the combustion products (F) flow downwardly.

7. Boiler according to any one of claims 1 to 6, characterized in that the first heat exchanger (30) comprises two half-exchangers (30a, 30b) situated on either side of a central vertical duct (107) for exhausting the combustion products (F) which have passed through both half-exchangers (30a, 30b).

8. Boiler according to any one of claims 1 to 7, characterized in that the first heat exchanger (30) is a fin type heat exchanger.

9. Boiler according to any one of claims 4 to 6, characterized in that the second heat exchanger (40) is a fin type heat exchanger.

10. Boiler according to any one of claims 1 to 9, characterized in that a heat-insulating material (109) is placed inside the sheath (104) in the parts thereof not occupied by the air feed ducts (105) and the combustion product exhaust duct (106).

## Patentansprüche

1. Brennwertkessel mit verringerter Rauchfahne, umfassend eine Zufuhrleitung (105) für die Verbrennungsluft, eine Abgasleitung (106) zum Abführen der Verbrennungsprodukte, die beide oberhalb des Raumes, der den Kessel enthält, in die Atmosphäre münden, eine Versorgungsleitung (108) für die Zufuhr des Brenngases, einen Ausblasventilator (102) zur Ausbringung der Verbrennungsprodukte, einen Kessel (100) mit einem Brenner (101), zumindest einen Kondensationswärmetauscher (10, 20), um einen Wasserkreislauf (11, 21) mit den Verbrennungsprodukten, die im Kessel (100) gebildet werden, zu erwärmen, und eine Ablaßleitung (60) zur Ausbringung des im Bereich des Kondensationswärmetauschers (10, 20) gebildeten Wassers, weiter eine dichte Umhüllung (110), die den Kessel (100) umgibt und einen ersten, oberhalb des Kessels (100) angeordneten, Wärmetauscher (30), um einen Wärmeaustausch zwischen der Frischluft (A), die über die Zufuhrleitung (105) kommt und den Verbrennungsprodukten (F), die vom Kessel (100) kommen und die noch nicht verdünnt sind, zu bewirken, dadurch gekennzeichnet, daß Ableitorgane (70) angebracht sind, um einen Teil der Luft (A), die vom ersten Wärmetauscher (30) kommt, abzutrennen und eine Durchlüftung des freien Raumes, der sich zwischen dem Kessel (100) und der dichten Hülle (110) befindet, zu bewirken, während der Rest der Luft, die vom ersten Wärmetauscher (30) kommt, zum Brenner (101) geführt wird, und daß zumindest eine kalibrierte Öffnung (50) vorgesehen ist, um die Luft (A), die um den Kessel (100) gestreift ist, in die Abgasleitung (107) der Verbrennungsprodukte (F) stromaufwärts des Ausblasventilators (102) und stromabwärts des ersten Wärmetauschers (30) einzubringen, und daß die Zufuhrleitung (105) für die frische, von der Atmosphäre kommende Verbrennungsluft und die Abgasleitung (106) für die Ausbringung der verdünnten Verbrennungsprodukte in die Atmosphäre stromabwärts des Ausblasventilators (102) im Inneren einer gemeinsamen Hülle (104) vorgesehen sind, daß sie Durchmesser aufweisen, die im wesentlichen gleich sind, und daß sie im wesentlichen übereinander und parallel zueinander, einander tangential über den größten Teil der Hülle (104) berührend, angeordnet sind, und daß weiter im Bereich der Ausmündung der Hülle (104) die Abgasleitung (106) gebogen verläuft und in die Achse der Hülle (104) schwenkt, während das Rohr (105) für die Einbringung der Frischluft in einem Teil mit zunehmendem Querschnitt, der sich mit der Hülle (104) verbindet, endet, um einen Lufteinlaß zu bilden, bei dem die Ansaugung koaxial um das Abgasrohr (106) erfolgt.

2. Kessel nach Anspruch 1, dadurch gekennzeichnet, daß der erste Wärmetauscher (30) vom Gegenstromtyp ist, wobei der Luftstrom absteigend und der Abgasstrom aufsteigend geführt ist.

3. Kessel nach Anspruch 1, dadurch gekennzeichnet, daß der erste Wärmetauscher vom Parallelstromtyp ist, wobei der Luftstrom und die Verbrennungsprodukte absteigend geführt werden.

4. Kessel nach einem der Ansprüche 1 bis 3, dadurch gekennzeichnet, daß er einen zweiten Wärmetauscher (40) aufweist, der oberhalb des Kessels (100) angeordnet ist, um einen Wärmeaustausch zwischen der um den Kessel (100) gestrichenen Luft und den Verbrennungsprodukten (F), die vom Kessel (100) kommen, durchzuführen, bevor die letzteren in den ersten Wärmetauscher (30) gelangen.

5. Kessel nach Anspruch 4, dadurch gekennzeichnet, daß der zweite Wärmetauscher (40) oberhalb des ersten Wärmetauschers (30) angeordnet ist, wobei er vom Luftstrom (31) des ersten Wärmetauschers (30) isoliert ist.

6. Kessel nach Anspruch 5, dadurch gekennzeichnet, daß der zweite Wärmetauscher (50) vom Kreuzstromtyp ist, wobei der Luftstrom (A) leicht ansteigend verläuft, indem er etwas gegenüber der Horizontalen geneigt ist, während der Verbrennungsproduktestrom (F) absteigend fließt.

7. Kessel nach einem der Ansprüche 1 bis 6, dadurch gekennzeichnet, daß der erste Wärmetauscher (30) aus zwei Teiltauschern (30a, 30b) besteht, die zu beiden Seiten einer vertikalen zentralen Abgasleitung für die Verbrennungsprodukte (F) angeordnet sind, die die beiden Teiltauscher (30a, 30b) durchquert.

8. Kessel nach einem der Ansprüche 1 bis 7, dadurch gekennzeichnet, daß der erste Wärmetauscher (30) vom Flügeltyp ist.

9. Kessel nach einem der Ansprüche 4 bis 6, dadurch gekennzeichnet, daß der zweite Wärmetauscher (40) vom Flügeltyp ist.

10. Kessel nach einem der Ansprüche 1 bis 9, dadurch gekennzeichnet, daß das Innere der Umhüllung (104), soweit es nicht von der Zufuhrleitung (105) und der Abgasleitung (106) für die Verbrennungsprodukte eingenommen wird, von einem wärmedämmenden Material (109) erfüllt ist.

EP 0 214 883 B1

**Fig.1**

**Fig.2**

**Fig.2A**

**Fig.2B**

EP 0 214 883 B1

Fig-3

Fig-5

Fig-4

Fig-6

Fig.8

Fig.9

Fig.7

Fig.10

Fig.11